# EUROPEAN PATENT SPECIFICATION

(11) **EP 3 337 256 B1**
(45) Date of publication and mention of the grant of the patent: **02.08.2023**
(21) Application number: 16791981.0
(22) Date of filing: 11.04.2016
(51) Int. Cl.: H04W 4/70, H04W 72/21, H04W 74/00, H04W 72/00, H04W 76/14

(54) **METHOD AND DEVICE FOR PROCESSING PROXIMITY SERVICES IN MULTIPLE CARRIERS**
VERFAHREN UND VORRICHTUNG ZUR VERARBEITUNG VON PROXIMITÄTSDIENSTEN BEI MEHREREN TRÄGERN
PROCÉDÉ ET DISPOSITIF DE TRAITEMENT DE SERVICES DE PROXIMITÉ DANS DES PORTEUSES MULTIPLES

(30) Priority: 14.08.2015 CN 201510502494
(43) Date of publication of application: 20.06.2018
(73) Proprietor: ZTE Corporation, Shenzhen, Guangdong 518057 (CN)
(72) Inventor: LI, Dapeng, Shenzhen Guangdong 518057 (CN); CHEN, Yuqin, Shenzhen Guangdong 518057 (CN); CHEN, Lin, Shenzhen Guangdong 518057 (CN)
(74) Representative: Regimbeau
(86) International application number: PCT/CN2016/078975
(87) International publication number: WO 2016/180131

(56) References cited:
- WO-A1-2013/125871
- CN-A- 104 540 236
- CN-A- 104 717 714
- US-A1- 2014 342 747
- "3rd Generation Partnership Project; Technical Specification Group Services and System Aspects; Study on architecture enhancements to support Proximity-based Services (ProSe) (Release 12)", 3GPP STANDARD; 3GPP TR 23.703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V2.0.0, 10 March 2014 (2014-03-10), pages 1-324, XP050769632, [retrieved on 2014-03-10]
- QUALCOMM INCORPORATED: "Signaling Details for ProSe Direct Discovery", 3GPP DRAFT; R2-142540-PROSE DIRECT DISCOVERY SIGNALING DETAILS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 18 May 2014 (2014-05-18), XP050790383, Retrieved from the Internet: URL:http://www.3gpp.org/ftp/Meetings_3GPP_ SYNC/RAN1/RAN2/Docs/ [retrieved on 2014-05-18]

## Description

### TECHNICAL FIELD

The present invention relates to the field of communications, and in particular, to a method and device for processing proximity services in multi-carrier.

### BACKGROUND

With the development of wireless multimedia services, people's demand for high data rate and user experience is increasing day by day, thus putting higher demands on the system capacity and coverage of traditional cellular networks. On the other hand, the popularity of applications such as social networks, short-range data sharing, and local advertisements has caused people to have a growing demand for understanding of and communicating with nearby people and things of interest (eg, proximity services). The traditional base-station-centric cellular network has obvious shortages in support of high data rate and proximity services (ProSe). Under this demand background, the Device-to-Device (D2D) technology that represents the new direction of the future communication technology comes into being. The application of the D2D technology can reduce the burden on the cellular network, reduce the battery power consumption of the user equipment, increase the data rate, and improve the robustness of network infrastructures, meeting the requirements of the above high data rate service and the proximity service well.

The D2D services (or the ProSe services) may work in a licensed frequency band or an unlicensed frequency band and allow multiple user equipments supporting D2D function, that is, D2D user equipment (D2D UE) that performs D2D services with network infrastructure or without network infrastructure. The D2D services generally include: a prose direct discovery technology and a D2D communication technology. The prose direct discovery technology is used to judge or determine whether two or more user equipments are in proximity to each other (for example, in D2D communicable range), or to judge or determine a second user equipment in proximity to a first user equipment. Generally, the D2D user equipments may discover each other by transmitting or receiving a discovery signal or information. With the coverage of a cellular network, the network may assist the D2D user equipment to perform prose direct discovery. The D2D communication technology refers to a technology that a part or all of communication data among D2D user equipments may be directly communicated without network infrastructure.

The use of D2D communication by terminals in proximity zones can bring many benefits to the terminals, such as higher speed, lower delay and less power consumption, and greatly improve the radio resource efficiency of the operators. A relay mode of D2D helps the operators to improve their radio coverage. For applications, more attractive new services may be developed using the proximity information in the D2D communication process. Public safety systems can also use the D2D technology to achieve the communication between terminals without radio coverage.

The prose direct discovery technology is further divided into two different modes. One mode is D2D direct discovery. The other mode is evolved packet core (EPC), that is, the geographical location information of each terminal is saved through the core network, and the proximity direct discovery function is further provided according to the geographical location information.

In a practical deployment, when a terminal resides in a cell, the terminal may listen for messages of proximity services of other multiple carrier frequencies, for example, prose discovery services and/or prose communication services. In the meantime, the terminal may listen for messages of proximity services on other carriers. However, due to a deployment reason, the base station cannot obtain the resource location information of these carrier frequencies. Therefore, in the case that the terminal supports only one radio transmitter, for the LTE service of the terminal and the proximity services carried on the carrier frequency of the non-serving cell, since the terminal supports only one radio transmitter, the terminal cannot transmit the proximity service on two frequencies simultaneously, causing a conflict in the time domain.

There is currently no effective solutions with respect to the problem in the related art that since the terminal supports only one radio transmitter, the terminal cannot transmit the proximity service on two frequencies simultaneously, causing a conflict in the time domain.

3GPP TR 23.703 is a core network protocol and teaches EPC-level PreSe discovery and Network assisted ProSe discovery.

3GPP draft R2-142540 Signaling details for ProSe Direct Discovery" proposed by Qualcomm incorporated teaches when UE transitions to RRC_CONNNECTED, it should stop using Type 1 resources as indicated in SIB; and send ProSeDirectDiscoveryIndication (RRC_message) to eNB.

An example of prior art method for performing D2D communication by a first terminal and a second terminal in a wireless communication system is provided in US 2014/0342747 A1. The method includes: receiving a D2D communication setup response message including resource region information for the D2D communication from a base station; determining, based on the resource region information, whether to switch an operation frequency band of the first terminal from a first frequency band to a second frequency band; and performing the D2D communication with the second terminal at the first frequency band or the second frequency band according to the determined result, wherein either the first frequency band or the second frequency band may be used for transmission in the D2D communication and the other may be used for reception in the D2D communication.

### SUMMARY

The present invention is set out in the appended set of claims.

### BRIEF DESCRIPTION OF DRAWINGS

The accompanying drawings described herein are used to provide a further understanding of the present invention and constitute a part of the present application. The schematic embodiments of the present invention and the descriptions of the schematic embodiments are used to explain the present invention, and do not constitute improper limitations to the present invention. In the accompanying drawings:
FIG. 1 is a first flowchart of a method for processing proximity services in multi-carrier according to an embodiment of the present invention;
FIG. 2 is a second flowchart of a method for processing proximity services in multi-carrier according to an embodiment of the present invention;
FIG. 3 is a first structural block diagram of a device for processing proximity services in multi-carrier according to an embodiment of the present invention;
FIG. 4 is an optional first structural block diagram of a device for processing proximity services in multi-carrier according to an embodiment of the present invention;
FIG. 5 is a second structural block diagram of a device for processing proximity services in multi-carrier according to an embodiment of the present invention;
FIG. 6 is a first flowchart of a method for solving proximity services multi-carrier scenario collision according to an optional embodiment of the present invention;
FIG. 7 is a second flowchart of a method for solving proximity services multi-carrier scenario collision according to an optional embodiment of the present invention;
FIG. 8 is a third flowchart of a method for solving proximity services multi-carrier scenario collision according to an optional embodiment of the present invention; and
FIG. 9 is a fourth flowchart of a method for solving proximity services multi-carrier scenario collision according to an optional embodiment of the present invention.

### DETAILED DESCRIPTION

Hereinafter, the present invention will be described in detail with reference to the accompanying drawings and embodiments. It should be noted that, in the case of no conflict, the embodiments in the present application and the features in the embodiments may be combined with each other.

It should be noted that the terms "first", "second" and the like in the description and claims of the present invention as well as the above drawings are used to distinguish similar objects, and are not necessarily used to describe a specific sequence or a sequence.

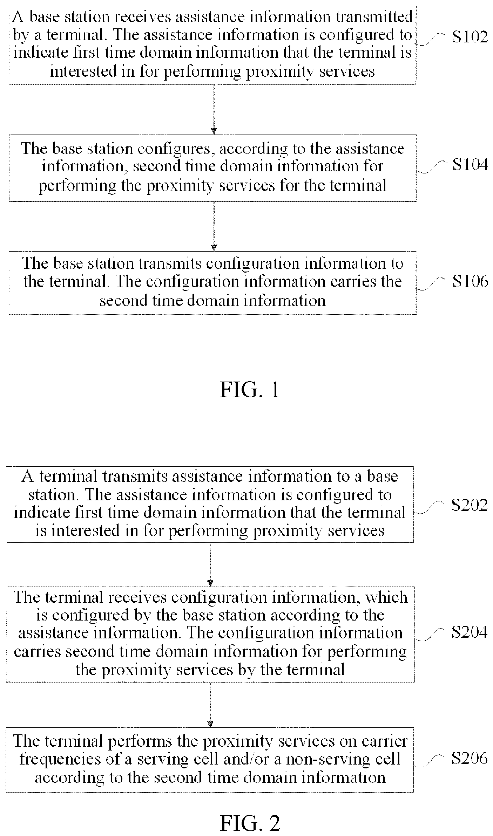

In the present embodiment, a method for processing proximity services in multi-carrier is provided. FIG. 1 is a first flowchart of a method for processing proximity services in multi-carrier according to an embodiment of the present invention. As shown in FIG. 1, the process includes the following steps.

In step S102, a base station receives assistance information transmitted by a terminal. The assistance information is configured to indicate first time domain information, in which the terminal is interested. The first time domain information is used for performing the proximity services.

In step S104, the base station configures, according to the assistance information, second time domain information for performing the proximity services for the terminal.

In step S106, the base station transmits configuration information to the terminal. The configuration information carries the second time domain information.

Through the step S 102 to step S106 of this embodiment, after the base station receives assistance information transmitted by a terminal, the assistance information being configured to indicate first time domain information for performing the proximity services, in which the terminal is interested, the base station configures according to the assistance information, the second time domain information for finally performing the proximity services for the terminal, thereby solving the problem in the related art that since the terminal supports only one transmitter, the terminal cannot transmit the proximity service on two frequencies simultaneously, causing a conflict in the time domain, and thus improving the performance of the terminal.

It should be noted that the assistance information involved in this embodiment is: information of a collision resolution mode and/or information of the carrier frequency resource pool of the non-serving cell. The collision resolution mode includes a first collision resolution mode and a second collision resolution mode. The information of the first collision resolution mode is represented by an offset value, a cycle value and an active duration. The information of the second collision resolution mode is represented by a bit map, an offset value and a cycle value. The information of the carrier frequency resource pool of the non-serving cell is represented by a use cycle and an offset value.

The offset value is an offset amount relative to a system frame number (SFN) of 0 of a serving cell. A purpose of the offset value is to calculate by a node a starting position of the scheduling period in which the terminal wishes to perform the proximity service. The cycle value refers to the length of a cycle time of the scheduling period. The node cyclically calculates the time domain of the scheduling period with the cycle value. The active duration refers to time domain information required by the proximity service. Through the cycle value and the active duration, the node may calculate the scheduling period in which the terminal wishes to perform the proximity service and the scheduling period in which the terminal wishes to perform an LTE service. The bit map may identify scheduling information regarding that the terminal wishes to perform the proximity service within one or more radio frames.

The manner by which the base station configures according to the assistance information the second time domain information for performing the proximity services for the terminal involved in this embodiment, is implemented by the following way according to the invention.

In step S11, the base station acquires the assistance information according to the information of the collision resolution mode and/or the information of the carrier frequency resource pool of the non-serving cell.

In step S12, the base station uses the assistance information configured in a time domain range of a measurement gap as the second time domain information; and/or, uses the assistance information configured in an inactive time range of a discontinuous reception as the second time domain information.

It can be known from the above steps S11 and S12 that, in this embodiment, the assistance information of performing the proximity service by the terminal may be taken into account in the inactive time of the discontinuous reception (DRX) based on the discontinuous reception. Therefore, the terminal may perform the proximity service in the inactive time in the DRX cycle. Alternatively, based on the configuration of the measurement gap, the assistance information of performing the proximity service by the terminal may be taken into account in the configured time domain range of the measurement gap, when the base station designs the measurement gap. Therefore, the terminal may perform proximity services within the measurement gap configuration.

The proximity services involved in this embodiment include at least one of: a reception of a prose discovery, a transmission of the prose discovery, a reception of a prose communication, and a transmission of the prose communication. That is, in this embodiment, one or more of the above types of proximity services may be performed simultaneously.

It should be noted that, in this embodiment, the terminal supports only one radio transmitter.

FIG. 2 is a second flowchart of a method for processing proximity services in multi-carrier according to an embodiment of the present invention. As shown in FIG. 2, this method includes the following steps.

In step S202, a terminal transmits assistance information to a base station. The assistance information is configured to indicate first time domain information, in which the terminal is interested. The first time domain information is used for performing the proximity services.

In step S204, the terminal receives configuration information, which is configured by the base station according to the assistance information. The configuration information carries second time domain information for performing the proximity services by the terminal.

In step S206, the terminal performs the proximity services on carrier frequencies of a serving cell and/or a non-serving cell according to the second time domain information.

In this embodiment, the manner by which the terminal acquires the assistance information of interest may be as follows. The terminal acquires configuration information of resource pool of a specific prose discovery and frequency information of the carrier frequency of the non-serving cell of interest by reading a system broadcasting message of the carrier frequency of the non-serving cell, a system broadcasting message of the carrier frequency of the serving cell and/or a dedicated radio resource control (RRC) message. The configuration information of resource pool includes the SFN position and the sub-frame position of the resource pool.

The assistance information involved in this embodiment includes information of a collision resolution mode and/or information of the carrier frequency resource pool of the non-serving cell. The collision resolution mode includes a first collision resolution mode and a second collision resolution mode. The information of the first collision resolution mode is represented by an offset value, a cycle value and an active duration. The information of the second collision resolution mode is represented by a bit map, an offset value and a cycle value. The information of the carrier frequency resource pool of the non-serving cell is represented by a use cycle and an offset value.

The offset value is an offset amount relative to a system frame number (SFN) of 0 of a serving cell. A purpose of the offset value is to calculate by a node a starting position of the scheduling period in which the terminal wishes to perform the proximity service. The cycle value refers to the length of a cycle time of the scheduling period. The node cyclically calculates the time domain of the scheduling period with the cycle value. The active duration is time domain information required by the proximity service. Through the cycle value and the active duration, the node may calculate the scheduling period in which the terminal wishes to perform the proximity service and the scheduling period in which the terminal wishes to perform an LTE service. The bit map may identify scheduling information regarding that the terminal wishes to perform the proximity service within one or more radio frames.

It should be noted that, the second time domain information involved in this embodiment is configured through at least one of the following manners: using the assistance information configured in a time domain range of a measurement gap as the second time domain information; using the assistance information configured in an inactive time range of a discontinuous reception as the second time domain information.

The proximity services involved in this embodiment include at least one of: a reception of a prose discovery, a transmission of the prose discovery, a reception of a prose communication, and a transmission of the prose communication. That is, in this embodiment, one or more of the above types of proximity services may be performed simultaneously.

It should be noted that, in this embodiment, the terminal supports only one radio transmitter.

Through the description of the above embodiments, those skilled in the art can clearly understand that the methods of the above embodiments may be implemented by software plus a necessary universal hardware platform, and certainly may also be implemented by hardware. However, in many cases, the former is better. Based on this understanding, the technical solution of the present invention essentially, or the part of the present invention contributing to the prior art, may be embodied in the form of a software product stored in a storage medium such as a ROM / RAM, a magnetic disk, Optical disc). The software product includes a number of instructions for causing a terminal device (such as a mobile phone, a computer, a server, or a network device) to perform the methods of the embodiments of the present invention.

An embodiment further provides a device for processing proximity services in multi-carrier. The device is configured to implement the above embodiments and preferred implementations. The explanations that have been made will not be repeated here. The term "module" used below may be a combination of software and/or hardware that implements a predetermined function. Although the devices described in the following embodiments are preferably implemented in software, the implementation of hardware or a combination of software and hardware is also possible and contemplated.

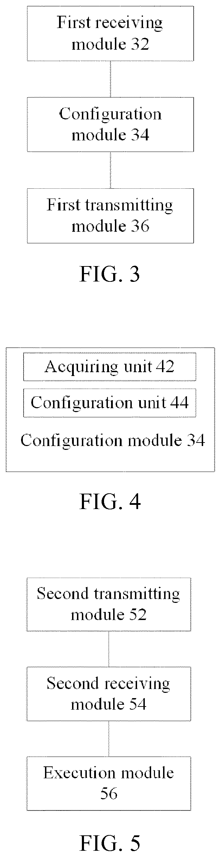

FIG. 3 is a first structural block diagram of a device for processing proximity services in multi-carrier according to an embodiment of the present invention. The device is applied to the base station side. As shown in FIG. 3, the device includes a first receiving module 32, a configuration module 34 and a first transmitting module 36. The first receiving module 32 is configured to receive assistance information transmitted by a terminal. The assistance information is configured to indicate first time domain information, in which the terminal is interested. The first time domain information is used for performing the proximity services. The configuration module 34 is coupled to the first receiving module 32 and is configured to configure, according to the assistance information, second time domain information for performing the proximity services for the terminal. The first transmitting module 36 is coupled to the configuration module 34 and is configured to transmit configuration information to the terminal. The configuration information carries the second time domain information.

Optionally, the assistance information includes information of a collision resolution mode and/or information of a carrier frequency resource pool of a non-serving cell. The collision resolution mode includes a first collision resolution mode and a second collision resolution mode. The information of the first collision resolution mode is represented by an offset value, a cycle value and an active duration. The information of the second collision resolution mode is represented by a bit map, an offset value and a cycle value. The information of the carrier frequency resource pool of the non-serving cell is represented by a use cycle and an offset value.

FIG. 4 is an optional first structural block diagram of the device for processing proximity services in multi-carrier according to an embodiment of the present invention. As shown in FIG. 4, the configuration module 34 includes an acquiring unit 42 and a configuration unit 44. The acquiring unit 42 is configured to acquire the assistance information according to the information of the collision resolution mode and/or the information of the carrier frequency resource pool of the non-serving cell. The configuration unit 44 is coupled to the acquiring unit 42. The configuration unit 44 is configured to use the assistance information configured in a time domain range of a measurement gap as the second time domain information; and/or, use the assistance information configured in an inactive time range of a discontinuous reception as the second time domain information.

Optionally, the proximity services include at least one of: a reception of a prose discovery, a transmission of the prose discovery, a reception of a prose communication, and a transmission of the prose communication. The terminal supports only one radio transmitter.

FIG. 5 is a second structural block diagram of a device for processing proximity services in multi-carrier according to an embodiment of the present invention. The device is applied to the terminal side. As shown in FIG. 5, the device includes: a second transmitting module 52, a second receiving module 54 and an execution module 56. The second transmitting module 52 is configured to transmit assistance information to a base station. The assistance information is configured to indicate first time domain information for performing the proximity services, in which the terminal is interested. The second receiving module 54 is coupled to the second transmitting module 52 and is configured to receive configuration information which is configured by the base station according to the assistance information. The configuration information carries second time domain information for performing the proximity services by the terminal. The execution module 56 is coupled to the second receiving module 54 and is configured to perform the proximity services on carrier frequencies of serving cells and/or non-serving cells according to the second time domain information.

Optionally, the assistance information includes information of a collision resolution mode and/or information of a carrier frequency resource pool of a non-serving cell. The collision resolution mode includes a first collision resolution mode and a second collision resolution mode. The information of the first collision resolution mode is represented by an offset value, a cycle value and an active duration. The information of the second collision resolution mode is represented by a bit map, an offset value and a cycle value. The information of the carrier frequency resource pool of the non-serving cell is represented by a use cycle and an offset value.

Optionally, the second time domain information is configured through at least one of the following manners: using the assistance information configured in a time domain range of a measurement gap as the second time domain information; using the assistance information configured in an inactive time range of a discontinuous reception as the second time domain information.

Optionally, the proximity services include at least one of: a reception of a prose discovery, a transmission of the prose discovery, a reception of a prose communication, and a transmission of the prose communication. The terminal supports only one radio transmitter.

The present invention is described below with reference to optional embodiments of the present invention.

An optional embodiment provides a method for solving proximity services multi-carrier scenario collision. The method includes the following steps.

In step S301, the terminal transmits assistance information for collision resolution.

The assistance information is at least one of: information of a collision resolution mode and/or information of a carrier frequency resource pool of a non-serving cell.

In addition, the assistance information for collision resolution may further include frequency information with which the terminal wishes to perform the proximity service on the carrier of the non-serving cell. The proximity services involved in this optional embodiment may be at least one of: a reception of a prose discovery, a transmission of the prose discovery, a reception of a prose communication, and a transmission of the prose communication.

The collision resolution mode involved in this optional embodiment is configured to indicate the scheduling period (that is, time domain information) in in which the terminal wishes to perform the proximity service. The scheduling period in which the terminal wishes to perform the proximity service is an available time period for the proximity service, which is calculated by the terminal by combining time domain information of resource pools on the carrier frequencies in which the terminal is interested.

The collision resolution mode includes a first mode (corresponding to the collision resolution mode in the above embodiments) and a second mode (corresponding to the carrier resource pool of the serving cell in the above embodiments). The information of the first mode is represented by an offset value, a cycle value and an active duration of the scheduling period. The information of the second mode is represented by a bit map, an offset value and a cycle value of the scheduling period.

The offset value is an offset amount relative to the SFN of 0 of the serving cell. A purpose of the offset value is to calculate by a node a starting position of the scheduling period in which the terminal wishes to perform the proximity service. The cycle value refers to the length of a cycle time of the scheduling period. The node cyclically calculates the time domain of the scheduling period with the cycle value. The active duration is time domain information required by the proximity service. Through the cycle value and the active duration, the node may calculate the scheduling period in which the terminal wishes to perform the proximity service and the scheduling period in which the terminal wishes to perform an LTE service. The bit map may identify scheduling information regarding that the terminal wishes to perform the proximity service within one or more radio frames.

The information of the carrier frequency resource pool of the non-serving cell refers to the information of resource pool of the proximity service on the carrier frequency of the non-serving cell, the proximity service includes a sidelink discovery and/or a sidelink communication, and the resource pool includes announcement resource pools and/or monitor resource pools of the above two types of services. The information of the resource pool may be represented by a SL-DiscResourcePool parameter, or be represented by parameters such as a use period, an offset and the like.

In step S302, the base station configures a collision resolution configuration (corresponding to the configuration information in the above embodiments) of the terminal with reference to the assistance information for collision resolution.

The collision resolution configuration includes a configuration scheduling period and information of collided service types.

The scheduling period may be one of the following manners.

In a first manner, the scheduling period is a measurement gap.

The base station configures a gap pattern and a gap offset, a gap period, and the terminal can calculate a SFN position and a sub-frame position of a measurement scheduling period through the gap pattern and the gap offset. The measurement may be a newly added measurement event, such as a newly added measurement type of a proximity service in a multi-carrier scenario or reuse a measurement type in the related art.

In a second manner, the scheduling period is an inactive time of a discontinuous reception (DRX) cycle.

The base station configures the DRX for the terminal. The inactive time is a period of time of the configured cycle of the DRX excluding the active time. The scheduling period is the inactive time in this manner. The active time refers to the time for performing LTE. The inactive time refers to the time for performing the proximity service.

In step S303, the terminal performs the proximity service using resources of this carrier frequency and/or the carrier frequency of the non-serving cell according to the collision resolution configuration.

The terminal performs, according to the scheduling period and the type information of the service in the configuration, a respective proximity service.

If the base station configures multiple scheduling periods and the type information of the service corresponding to the multiple scheduling periods, the terminal performs proximity services of different types in different inactive areas.

The present invention will be described in detail below in conjunction with optional embodiments of the present invention.

### First optional embodiment

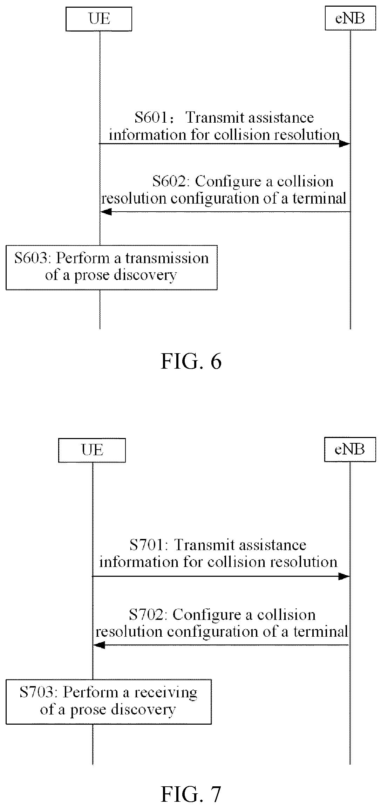

In this optional embodiment, the assistance information for collision resolution that is transmitted from the terminal to the base station is the information of the first mode in the collision resolution mode. FIG. 6 is a first flowchart of a method for solving proximity services multi-carrier scenario collision according to an optional embodiment of the present invention. As shown in FIG. 6 the method includes the following steps.

In step S601, the terminal transmits the assistance information for collision resolution to the base station.

If the terminal wishes to transmit a prose discovery message on the carrier frequency of the non-serving cell when residing in the serving cell, the terminal may transmit the assistance information for collision resolution to the base station. In the first optional embodiment, the assistance information is the information of the first mode in the collision resolution mode.

The terminal acquires configuration information of resource pool of a specific prose discovery and frequency information of the carrier frequency of the non-serving cell of interest, by reading a system broadcasting message of the carrier frequency of the non-serving cell, a system broadcasting message of the carrier frequency of the serving cell and/or a dedicated RRC message. The configuration information of resource pool includes the SFN position and the sub-frame position of the resource pool.

In the meanwhile, the terminal acquires the time domain information of the LTE service scheduling according to the configuration information of the base station in the related art. Based on the above two parts of information, the terminal determines that the LTE service and the service of transmission of the prose discovery cannot be performed simultaneously, when the terminal has only one transmitter.

In this case, the terminal calculates the time domain information (that is, the scheduling period in which the proximity service may be performed involved in this optional embodiment) for performing the transmission of the proximity service, according to the time domain information used in the LTE services. The time domain information used in the LTE services includes information such as LTE common signaling, LTE service scheduling, possible retransmission time of the LET service and the like.

The time domain information for transmitting the prose discovery service may be represented by means of the first mode in the collision resolution mode, that is, represented by the offset value, the cycle value and the active duration. For example, the beginning SFN and sub-frame of the time domain for transmitting the prose discovery service may be calculated with the offset value, the information of the next time domain may be calculated with the cycle value, and the active duration may represent the time of multiple consecutive frames or sub-frames. The base station may calculate the time domain information consistent with the terminal based on the same information.

The terminal reports the information of the first mode to the base station through the dedicated RRC message. In addition, the dedicated message may further include the type information of the collided services and/or the frequency information of the non-severing cell of interest. In this optional embodiment, the type of the service is the transmission of the prose discovery.

The dedicated RRC message may reuse the sidelinkUEinformation, or may be a newly added dedicated RRC message, for example, sidelinkMultiplecarrierUEinformation.

In step S602, the base station configures the terminal's collision resolution configuration with reference to the assistance information for collision resolution.

After receiving the dedicated RRC message transmitted by the terminal, the base station calculates, according to the assistance information for collision resolution in the dedicated RRC message, the information of the time domain in which the terminal wishes to perform the proximity service.

The base station calculates the scheduling period for performing the proximity service by the terminal according to the assistance information for collision resolution, the status of the LTE service of the terminal and the like. The scheduling period may not be exactly same as the information of the time domain in which the terminal wishes to perform the proximity service reported by the terminal. For example, the base station may allocate more radio frames or radio sub-frames or allocate less radio frames or radio sub-frames on the basis of information of the time domain reported by the terminal.

The base station designs a new scheduling period for the terminal after completing the calculation. In this optional embodiment, a discontinuous reception (DRX) based manner is used. When designing the DRX cycle, the base station considers the scheduling period in which the terminal performs the proximity service within the inactive time of the DRX cycle. As a result, the terminal performs the proximity service within the inactive time of the DRX cycle.

After completing the calculation of the DRX cycle, the base station configures the DRX cycle to the terminal using the dedicated RRC message. The RRC message may reuse an existing RRCconfigurationReconfiguration message, or may be a newly added RRC message.

If the DRX cycle obtained by the base station after completing the calculation is consistent with the DRX cycle which was once configured for the terminal by the base station, the base station still configures the DRX cycle to the terminal through the dedicated RRC message.

The scheduling period further includes the type information of collided services. In a same RRC message, in addition to the DRX cycle, the type information of collided services needs to be configured. In this embodiment, the type information of collided services is the transmission of the prose discovery.

In step S603, the terminal performs the proximity service using the resource of the carrier frequency of the non-serving cell according to the collision resolution configuration.

After receiving the dedicated RRC message (such as RRCconfigurationReconfiguration) transmitted by the base station, the terminal disassembles the collision resolution configuration information therein. The configuration information includes: the type information of the collided services and the scheduling period. The scheduling period in this optional embodiment is the DRX cycle. The type information of the collided service in this optional embodiment is the transmission of the prose discovery.

The terminal transmits the prose discovery in the inactive period of the configured DRX cycle.

### Second optional embodiment

In this optional embodiment, the assistance information for collision resolution that is transmitted from the terminal to the base station is the information of the second mode in the collision resolution mode. FIG. 7 is a second flowchart of the method for solving proximity service multi-carrier scenario collision according to an optional embodiment of the present invention. As shown in FIG. 7 the method includes the following steps.

In step S701, the terminal transmits the assistance information for collision resolution to the base station.

If the terminal wishes to receive a prose discovery message on the carrier frequency of this serving cell and/or non-serving cell when residing in the serving cell, the terminal may transmit the assistance information for collision resolution to the base station. In this optional embodiment, the assistance information is the information of the second mode in the collision resolution mode.

The terminal acquires configuration information of resource pool of a specific prose discovery and frequency information of the carrier frequency of the non-serving cell of interest, by reading a system broadcasting message of the carrier frequency of the non-serving cell, a system broadcasting message of the carrier frequency of the serving cell and/or dedicated RRC message. The configuration information of the resource pool includes the SFN position and the sub-frame position of the resource pool.

When the terminal has only one transmitter, the terminal cannot perform the LTE service and the service of reception of the prose discovery simultaneously. Therefore, the terminal acquires the time domain information of the LTE service scheduling according to the configuration information of the base station in the related art. The terminal calculates the time domain information for receiving the proximity service, based on the above information, that is, based on the time domain information used in the LTE service. The time domain information used in the LTE service includes information such as LTE common signaling, LTE service scheduling, possible retransmission time of the LET service and the like.

The time domain information for receiving the prose discovery service may be represented by the information of the second mode, that is, represented by the bit map, the offset value and the cycle value. The bits in the bit map are set to be 0 or 1 for indicating whether consecutive or non-consecutive radio sub-frames in one or more radio frames need to be reserved for the proximity service.

The terminal reports the information of the second mode to the base station through the dedicated RRC message. The information may further include the type information of the collided services and/or the frequency information of the non-severing cell of interest. In this optional embodiment, the type of the service is the reception of the prose discovery.

The dedicated RRC message may reuse the sidelinkUEinformation, or may be a newly added dedicated RRC message, for example, sidelinkMultiplecarrierUEinformation.

In step S702, the base station configures the terminal's collision resolution configuration with reference to the assistance information for collision resolution.

After receiving the dedicated RRC message transmitted by the terminal, the base station calculates according to the assistance information for collision resolution in the dedicated RRC message, the information of the time domain in which the terminal wishes to perform the proximity service.

The base station calculates the scheduling period for performing the proximity service by the terminal according to the assistance information for collision resolution, the status of the LTE service of the terminal and the like. The scheduling period may not be exactly same as the information of the time domain in which the terminal wishes to perform the proximity service reported by the terminal. For example, the base station may allocate more radio frames or radio sub-frames or allocate less radio frames or radio sub-frames on the basis of information of the time domain reported by the terminal.

The base station designs a new scheduling period for the terminal after completing the calculation. The manner used in this optional embodiment is based on configuring a measurement gap. When the base station designs the measurement gap, the scheduling period in which the terminal performs the proximity service is considered within the time domain where the measurement gap is configured. As a result, the terminal can perform the proximity service within the measurement gap configuration.

After completing the calculation of the measurement configuration cycle, the base station configures the measurement gap to the terminal using the dedicated RRC message. The RRC message may reuse an existing RRCconfigurationReconfiguration message, or may be a newly added RRC message.

If the measurement gap cycle obtained by the base station after completing the calculation is consistent with the measurement gap cycle which was once configured for the terminal by the base station, the base station still configures the measurement gap to the terminal through the dedicated RRC message.

The scheduling period further includes the type information of collided services. In a same RRC message, in addition to the measurement gap cycle, the type information of collided services needs to be configured. In this embodiment, the type information of collided services is the reception of the prose discovery.

In step S703, the terminal performs the proximity service using the resource of this carrier frequency and/or the carrier frequency of the non-serving cell according to the collision resolution configuration.

After receiving the dedicated RRC message (such as RRCconfigurationReconfiguration) transmitted by the base station, the terminal disassembles the collision resolution configuration information therein. The configuration information includes: the type information of the collided services and the scheduling period. The scheduling period in this optional embodiment is measurement gap. The type information of the collided service in this optional embodiment is the receiving of the prose discovery.

The terminal receives the prose discovery in the configured measurement gap.

### Third optional embodiment

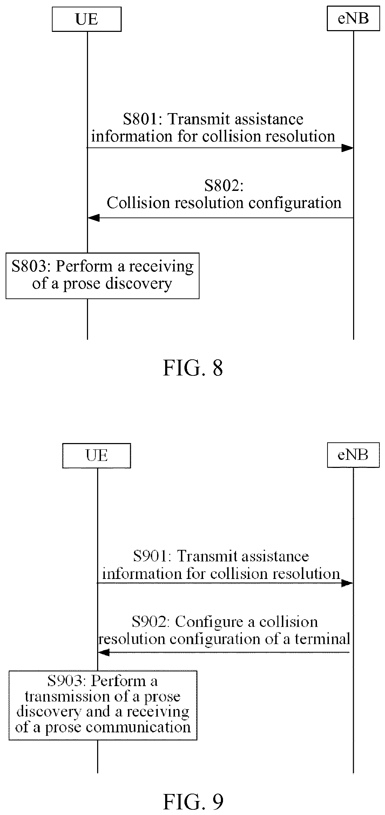

In this optional embodiment, the assistance information for collision resolution that is transmitted from the terminal to the base station is information of a carrier frequency resource pool of a non-serving cell. FIG. 8 is a first flowchart of a method for solving proximity services multi-carrier scenario collision according to an optional embodiment of the present invention. As shown in FIG. 8 the method includes the following steps.

In step S801, the terminal transmits the assistance information for collision resolution to the base station.

If the terminal wishes to receive a prose discovery message on the carrier frequency of this cell and/or a non-serving cell when residing in the serving cell, the terminal may transmit the assistance information for collision resolution to the base station. In this optional embodiment, the assistance information is the information of the carrier frequency resource pool of the non-serving cell.

The terminal acquires configuration information of resource pool of a specific prose discovery and frequency information of the carrier frequency of the non-serving cell of interest, by reading a system broadcasting message of the carrier frequency of the non-serving cell, a system broadcasting message of the carrier frequency of the serving cell and/or dedicated RRC message. The configuration information of the resource pool includes the SFN position and the sub-frame position of the resource pool.

When the terminal has only one transmitter, the terminal cannot perform the LTE service and the service of reception of the prose discovery simultaneously. Therefore, the terminal acquires the time domain information of the LTE service scheduling according to the configuration information of the base station in the related art. The terminal transmits the resource pool information of the carrier frequencies of all the acquired proximity services which the terminal is interested in receiving to the base station through the dedicated RRC message according to the above information. In addition, the message may further include the type information of the collided service. In this embodiment, the type information of the collided service is the reception of a prose discovery.

The information of the carrier frequency resource pool of the non-serving cell refers to the information of resource pool of the proximity service on the carrier frequency of the non-serving cell, the proximity service includes a sidelink discovery and/or a sidelink communication, and the resource pool includes announcement resource pools and/or monitor resource pools of the above two services. The information of resource pool may be represented by the definition of the resource pool in the related art, for example, represented by a SL-DiscResourcePool parameter, or be represented by parameters such as a use period, an offset and the like.

The dedicated RRC message may reuse the sidelinkUEinformation, or may be a newly added dedicated RRC message, for example, the sidelinkMultiplecarrierUEinformation message.

In step S802, the base station configures the terminal's collision resolution configuration with reference to the assistance information for collision resolution.

After receiving the dedicated RRC message transmitted by the terminal, the base station calculates the information of the time domain in which the terminal wishes to perform the proximity service according to the assistance information for collision resolution in the dedicated RRC message.

In this optional embodiment, the assistance information for collision resolution refers to the information of resource pools of the carrier frequencies of all the proximity services interested in receiving. The base station can obtain the time domain information in this serving cell corresponding to the carrier frequency resource pool of the non-serving cell according to the parameters of these resource pools such as the cycle and offset.

The base station calculates the scheduling period for performing the proximity service by the terminal, according to the assistance information for collision resolution, the status of the LTE service of the terminal and the like. The scheduling period may not be exactly same as the information of the time domain in which the terminal wishes to perform the proximity service reported by the terminal. For example, the base station may allocate more radio frames or radio sub-frames or allocate less radio frames or radio sub-frames on the basis of information of the time domain reported by the terminal.

The base station configures a new scheduling period for the terminal after completing the calculation. The manner used in this optional embodiment is based on configuring a measurement gap. When the base station designs the measurement gap, the scheduling period in which the terminal performs the proximity service is considered within the time domain where the measurement gap is configured. As a result, the terminal can perform the proximity service within the measurement gap configuration.

After completing the calculation of the measurement configuration cycle, the base station configures the measurement gap to the terminal using the dedicated RRC message. The RRC message may reuse an existing RRCconfigurationReconfiguration message, or may be a newly added RRC message.

If the measurement gap cycle obtained by the base station after completing the calculation is consistent with the measurement gap cycle which was once configured for the terminal by the base station, the base station still configures the measurement gap to the terminal through the dedicated RRC message.

The scheduling period further includes the type information of collided service. In a same RRC message, in addition to the measurement gap cycle, the type information of collided services needs to be configured. In this embodiment, the type information of collided services is the reception of the prose discovery.

In step S803, the terminal performs the proximity service using the resource of this carrier frequency and/or the carrier frequency of the non-serving cell according to the collision resolution configuration.

After receiving the dedicated RRC message (such as RRCconfigurationReconfiguration) transmitted by the base station, the terminal disassembles the collision resolution configuration information therein. The configuration information includes: the type information of the collided service and the scheduling period. The scheduling period in this optional embodiment is measurement gap. The type information of the collided service in this optional embodiment is the receiving of the prose discovery.

The terminal receives the prose discovery in the configured measurement gap.

### Fourth optional embodiment

In this optional embodiment, the assistance information for collision resolution that is transmitted from the terminal to the base station is in various forms including the information of the first mode of the collision resolution mode and the information of the carrier frequency resource pool of the non-serving cell. In the meantime, the collision resolution configuration configured for the terminal by the base station may support various types of collided services. FIG. 9 is a first flowchart of a method for solving proximity services multi-carrier scenario collision according to an optional embodiment of the present invention. As shown in FIG. 9 the method includes the following steps.

In step S901, the terminal transmits the assistance information for collision resolution to the base station.

If the terminal wishes to receive a prose communication message on the carrier frequency of this cell and/or non-serving cell when residing in the serving cell, and at the same time wishes to transmit a prose discovery on the carrier frequency of the non-serving cell, the terminal may transmit the assistance information for collision resolution to the base station. In this optional embodiment, the assistance information is the information of carrier frequency resource pool of the non-serving cell and the information of the first mode in the collision resolution mode.

The terminal acquires configuration information of receiving resource pool of a specific prose communication, configuration information of the transmission resource pool of a prose discovery, and frequency information of the carrier frequency of the non-serving cell of interest, by reading a system broadcasting message of the carrier frequency of the non-serving cell, a system broadcasting message of the carrier frequency of the serving cell and/or the dedicated RRC message. The configuration information of the resource pool includes the SFN position and the sub-frame position of the resource pool.

At the same time, the terminal acquires the time domain information of the LTE service scheduling according to the configuration information of the base station in the related art. When the terminal has only one transmitter, the terminal determines, based on the above parts of information, that the terminal cannot support the LTE service and the service of reception of the prose communication simultaneously or cannot support the LTE service and the service of transmission of the prose discovery simultaneously.

The time domain information of the service of transmission of the prose discovery may be represented by the first mode of the collision resolution mode, that is, represented by the offset value, the cycle value and the active duration. For example, the beginning SFN and sub-frame of the time domain for the service of transmitting the prose discovery may be calculated with the offset value, the information of the next time domain may be calculated with the cycle value, the active duration may represent the time of multiple consecutive frames or sub-frames. The base station may calculate the time domain information consistent with the terminal based on the same information.

The time domain information of the service of receiving the prose communication may be calculated by the base station through the carrier frequency resource pool information of the non-serving cell provided to the base station.

The terminal reports the resource pool information of all the acquired carrier frequencies for receiving the prose communication service of interest to the base station through the dedicated RRC message. At the same time, the dedicated RRC message may further include the time domain information of the transmitting prose discovery service that the terminal wishes to perform, that is, the information of the first mode of the collision resolution. The dedicated RRC message may further include the type information of the collided service. In this optional embodiment, the carrier frequency resource pool information is bonded to the service type of the reception of the prose communication. The service type of the information of the first mode of the collision resolution mode is the transmission of prose discovery.

The dedicated RRC message may reuse the sidelinkUEinformation, or may be a newly added dedicated RRC message, for example, sidelinkMultiplecarrierUEinformation.

In step S902, the base station configures the terminal's collision resolution configuration with reference to the assistance information for collision resolution.

After receiving the dedicated RRC message transmitted by the terminal, the base station calculates the information of the time domain in which the terminal wishes to perform the proximity service according to the assistance information for collision resolution in the dedicated RRC message.

In this embodiment, the assistance information for collision resolution is the resource pool information of all the carrier frequencies of interest for the reception of the prose communication and the information of the first mode of the collision resolution mode for the transmission of the prose discovery. The base station may acquire the time domain information in this cell corresponding to the resource pools of the carrier frequencies according to parameters such as the cycle and offset of these resource pools, the offset in the first mode and the active duration.

The base station calculates the scheduling period for performing the proximity service by the terminal according to the assistance information for collision resolution, the status of the LTE service of the terminal and the like. The scheduling period may not be exactly same as the information of the time domain reported by the terminal in which the terminal wishes to perform the proximity service. For example, the base station may allocate more radio frames or radio sub-frames or allocate less radio frames or radio sub-frames on the basis of the information of the time domain reported by the terminal.

The base station designs a new scheduling period for the terminal after completing the calculation. The manner used in this optional embodiment is based on a discontinuous reception (DRX) configuration. When configuring the DRX cycle, the base station considers both of the scheduling period in which the terminal receives the prose communication service and the scheduling period in which the terminal transmits the prose discovery within the inactive time of the DRX cycle. As a result, the terminal can receive the prose communication and transmit the prose discovery within the inactive time of the DRX cycle.

After completing the calculation of the DRX cycle, the base station configures the DRX cycle to the terminal using the dedicated RRC message. The RRC message may reuse an existing RRCconfigurationReconfiguration message, or may be a new added RRC message.

If the DRX cycle obtained by the calculation of the base station is consistent with the DRX cycle which was once configured for the terminal by the base station, the base station still configures the measurement gap to the terminal through the dedicated RRC message.

The scheduling period further includes the type information of collided service. In a same RRC message, in addition to the DRX cycle, the type information of collided service needs to be configured. In this embodiment, the type information of collided services is the transmission of the prose discovery and the reception of the prose communication.

In step S903, the terminal performs the proximity service using the resource of this carrier frequency and/or the carrier frequency of the non-serving cell according to the collision resolution configuration.

After receiving the dedicated RRC message (such as RRCconfigurationReconfiguration) transmitted by the base station, the terminal disassembles the collision resolution configuration information therein. The configuration information includes: the type information of the collided service and the scheduling period. The scheduling period in this optional embodiment is the discontinuous reception. The type information of the collided service in this optional embodiment is the transmission of the prose discovery and the reception of the prose communication.

The terminal performs the reception of the prose communication and transmission of the prose discovery within the inactive time of the DRX cycle. When the two types of services are collided, the terminal can avoid interference by offsetting the implementation times of the two types of services. The implementation times are still within the inactive time of the DRX cycle configured by the base station.

To sum up, through the optional embodiments of the present invention, the terminal can perform the proximity services using the resource pool on the carrier frequencies without changing the serving cell, thereby improving the user experience.

It should be noted that, each of the above-mentioned modules may be implemented by software or hardware, and the latter may be implemented by, but not limited to, the above-mentioned modules are all in the same processor; or the above-mentioned modules are respectively in multiple processor.

An embodiment of the present invention further provides a storage medium. Optionally, in the present embodiment, the above-mentioned storage medium may be configured to store program codes for performing the following steps.

In step S1, a base station receives assistance information transmitted by a terminal. The assistance information is configured to indicate first time domain information, in which the terminal is interested. The first time domain information is used for performing the proximity services.

In step S2, the base station configures, according to the assistance information, second time domain information for performing the proximity service for the terminal.

In step S3, the base station transmits configuration information to the terminal. The configuration information carries the second time domain information.

Optionally, for a specific example in this embodiment, reference may be made to the examples described in the foregoing embodiments and optional embodiments, and details are not described herein again in this embodiment.

Apparently, those skilled in the art should understand that each module or each step of the present invention described above can be implemented by a general computing device. The modules or steps can be centralized on a single computing device or distributed on a network formed by multiple computing devices. The modules or steps may alternatively be implemented with program codes executable by a computing device so that they may be stored in a storage device for execution by a computing device. In some cases, the steps shown or described may be performed in a different order than the order described herein, or they may be separately fabricated into individual integrated circuit modules, or multiple of them may be fabricated into a single integrated circuit module. As such, the present invention is not limited to any specific combination of hardware and software.

### INDUSTRIAL APPLICABILITY

In embodiments of the present invention, a manner is adopted in which after the base station receives assistance information transmitted by a terminal, the assistance information being configured to indicate assistance information for performing the proximity service, in which the terminal is interested, the base station configures according to the assistance information the second time domain information for finally performing the proximity services for the terminal. The problem in the related art that since the terminal supports only one transmitter, the terminal cannot transmit the proximity services on two frequencies simultaneously causing a conflict in the time domain is solved and the performance of the terminal is improved.

## Claims

1. A method for processing proximity services in multi-carrier, comprising:
receiving (S102), by a base station, assistance information transmitted by a terminal, wherein the assistance information comprises information of a collision resolution mode and/or information of a carrier frequency resource pool of a non-serving cell and is configured to indicate first time domain information, in which the terminal is interested; and wherein the first time domain information is used for performing the proximity services, wherein the terminal supports only one radio transmitter;
configuring (S104), by the base station, second time domain information for performing the proximity services for the terminal, according to the assistance information; and
transmitting (S106), by the base station, configuration information to the terminal, wherein the configuration information carries the second time domain information;
wherein the configuring, by the base station, second time domain information for performing the proximity services for the terminal, according to the assistance information comprises:
acquiring, by the base station, the assistance information according to the information of the collision resolution mode and/or the information of the carrier frequency resource pool of the non-serving cell; and
using, by the base station, the assistance information configured in a time domain range of a measurement gap as the second time domain information; and/or, using, by the base station, the assistance information configured in an inactive time range of a discontinuous reception as the second time domain information.

2. The method according to claim 1, wherein the collision resolution mode comprises:
a first collision resolution mode and a second collision resolution mode, the information of the first collision resolution mode is represented by an offset value, a cycle value and an active duration; the information of the second collision resolution mode is represented by a bit map, an offset value and a cycle value; the information of the carrier frequency resource pool of the non-serving cell is represented by a use cycle and an offset value.

3. A method for processing proximity services in multi-carrier, comprising:
transmitting (S202), by a terminal, assistance information to a base station, wherein the assistance information comprises information of a collision resolution mode and/or information of a carrier frequency resource pool of a non-serving cell and is configured to indicate first time domain information, in which the terminal is interested; and wherein the first time domain information is used for performing the proximity services, wherein the terminal supports only one radio transmitter;
receiving (S204), by the terminal, configuration information which is configured by the base station according to the assistance information, wherein the configuration information carries second time domain information for performing the proximity services by the terminal; and
performing (S206), by the terminal, the proximity services on carrier frequencies of serving cells and/or non-serving cells according to the second time domain information;
wherein the second time domain information is configured through at least one of the following manners:
using the assistance information configured in a time domain range of a measurement gap as the second time domain information; and
using the assistance information configured in an inactive time range of a discontinuous reception as the second time domain information.

4. The method according to claim 3, wherein
the collision resolution mode comprises: a first collision resolution mode and a second collision resolution mode, the information of the first collision resolution mode is represented by an offset value, a cycle value and an active duration; the information of the second collision resolution mode is represented by a bit map, an offset value and a cycle value; the information of the carrier frequency resource pool of the non-serving cell is represented by a use cycle and an offset value.

5. A base station comprising:
a first receiving module (32), configured to receive assistance information transmitted by a terminal, wherein the assistance information comprises information of a collision resolution mode and/or information of a carrier frequency resource pool of a non-serving cell and is configured to indicate first time domain information, in which the terminal is interested; and wherein the first time domain information is used for performing the proximity services, wherein the terminal supports only one radio transmitter;
a configuration module (34), configured to configure, according to the assistance information, second time domain information for performing the proximity services for the terminal; and
a first transmitting module (36), configured to transmit configuration information to the terminal, wherein the configuration information carries the second time domain information;
wherein the configuration module (34) comprises:
an acquiring unit (42), configured to acquire the assistance information according to the information of the collision resolution mode and/or the information of the carrier frequency resource pool of the non-serving cell; and
a configuration unit (44), configured to use the assistance information configured in a time domain range of a measurement gap as the second time domain information; and/or, use the assistance information configured in an inactive time range of a discontinuous reception as the second time domain information.

6. The device according to claim 5, wherein
the collision resolution mode comprises: a first collision resolution mode and a second collision resolution mode, the information of the first collision resolution mode is represented by an offset value, a cycle value and an active duration; the information of the second collision resolution mode is represented by a bit map, an offset value and a cycle value; the information of the carrier frequency resource pool of the non-serving cell is represented by a use cycle and an offset value.

7. A terminal comprising:
a second transmitting module (52) configured to transmit assistance information to a base station, wherein the assistance information comprises information of a collision resolution mode and/or information of a carrier frequency resource pool of a non-serving cell and is configured to indicate first time domain information, in which the terminal is interested; and wherein the first time domain information is used for performing the proximity services, wherein the terminal supports only one radio transmitter;
a second receiving module (54) configured to receive configuration information which is configured by the base station according to the assistance information, wherein the configuration information carries second time domain information for performing the proximity services by the terminal; and
an execution module (56) configured to perform the proximity services on carrier frequencies of serving cells and/or non-serving cells according to the second time domain information;
wherein the second time domain information is configured through at least one of the following manners:
using the assistance information configured in a time domain range of a measurement gap as the second time domain information; and
using the assistance information configured in an inactive time range of a discontinuous reception as the second time domain information.

8. The device according to claim 7, wherein
the collision resolution mode comprises: a first collision resolution mode and a second collision resolution mode, the information of the first collision resolution mode is represented by an offset value, a cycle value and an active duration; the information of the second collision resolution mode is represented by a bit map, an offset value and a cycle value; the information of the carrier frequency resource pool of the non-serving cell is represented by a use cycle and an offset value.

## Patentansprüche

1. Verfahren zum Verarbeiten von Nahbereichsdiensten in einem Mehrfachträger, das Folgendes umfasst:
Empfangen (S102) von Unterstützungsinformationen, die von einem Endgerät übertragen werden, durch eine Basisstation, wobei die Unterstützungsinformationen Informationen über einen Kollisionsauflösungsmodus und/oder Informationen über einen Trägerfrequenzressourcenpool einer nicht bedienenden Zelle umfassen und dazu ausgelegt sind, erste Zeitdomäneninformationen anzuzeigen, an denen das Endgerät interessiert ist; und wobei die ersten Zeitdomäneninformationen zum Durchführen der Nahbereichsdienste verwendet werden, wobei das Endgerät nur einen Funksender unterstützt;
Auslegen (S104) von zweiten Zeitdomäneninformationen zum Durchführen der Nahbereichsdienste für das Endgerät durch die Basisstation gemäß den Unterstützungsinformationen; und
Übertragen (S106) von Auslegungsinformationen durch die Basisstation zum Endgerät, wobei die Auslegungsinformationen die zweiten Zeitdomäneninformationen enthalten;
wobei das Auslegen von zweiten Zeitdomäneninformationen zum Durchführen der Nahbereichsdienste für das Endgerät durch die Basisstation gemäß den Unterstützungsinformationen Folgendes umfasst:
Erfassen der Unterstützungsinformationen durch die Basisstation gemäß den Informationen des Kollisionsauflösungsmodus und/oder den Informationen über den Trägerfrequenzressourcenpool der nicht bedienenden Zelle; und
Verwenden der Unterstützungsinformationen, die in einem Zeitdomänenbereich einer Messlücke als die zweiten Zeitdomäneninformationen ausgelegt sind, durch die Basisstation; und/oder Verwenden der Unterstützungsinformationen, die in einem inaktiven Zeitbereich eines diskontinuierlichen Empfangs als die zweiten Zeitdomäneninformationen ausgelegt sind, durch die Basisstation.

2. Verfahren nach Anspruch 1, wobei der Kollisionsauflösungsmodus Folgendes umfasst:
einen ersten Kollisionsauflösungsmodus und einen zweiten Kollisionsauflösungsmodus, die Informationen über den ersten Kollisionsauflösungsmodus werden durch einen Versatzwert, einen Zykluswert und eine aktive Dauer repräsentiert; die Informationen des zweiten Kollisionsauflösungsmodus werden durch ein Bitmap, einen Versatzwert und einen Zykluswert repräsentiert; die Informationen über den Trägerfrequenzressourcenpool der nicht bedienenden Zelle werden durch einen Verwendungszyklus und einen Versatzwert repräsentiert.

3. Verfahren zum Verarbeiten von Nahbereichsdiensten in einem Mehrfachträger, das Folgendes umfasst:
Übertragen (S202) von Unterstützungsinformationen durch ein Endgerät zu einer Basisstation, wobei die Unterstützungsinformationen Informationen über einen Kollisionsauflösungsmodus und/oder Informationen über einen Trägerfrequenzressourcenpool einer nicht bedienenden Zelle umfassen und dazu ausgelegt sind, erste Zeitdomäneninformationen anzuzeigen, an denen das Endgerät interessiert ist; und wobei die ersten Zeitdomäneninformationen zum Durchführen der Nahbereichsdienste verwendet werden, wobei das Endgerät nur einen Funksender unterstützt;
Empfangen (S204) von Auslegungsinformationen, die durch die Basisstation gemäß den Unterstützungsinformationen ausgelegt sind, durch das Endgerät, wobei die Auslegungsinformationen zweite Zeitdomäneninformationen zum Durchführen der Nahbereichsdienste durch das Endgerät enthalten; und
Durchführen (S206) der Nahbereichsdienste durch das Endgerät auf Trägerfrequenzen von bedienenden Zellen und/oder nicht bedienenden Zellen gemäß den zweiten Zeitdomäneninformationen;
wobei die zweiten Zeitdomäneninformationen auf mindestens eine der folgenden Weisen ausgelegt sind:
Verwenden der Unterstützungsinformationen, die in einem Zeitdomänenbereich einer Messlücke als die zweiten Zeitdomäneninformationen ausgelegt sind; und
Verwenden der Unterstützungsinformationen, die in einem inaktiven Zeitbereich eines diskontinuierlichen Empfangs als die zweiten Zeitdomäneninformationen ausgelegt sind.

4. Verfahren nach Anspruch 3, wobei
der Kollisionsauflösungsmodus Folgendes umfasst: einen ersten Kollisionsauflösungsmodus und einen zweiten Kollisionsauflösungsmodus, die Informationen über den ersten Kollisionsauflösungsmodus werden durch einen Versatzwert, einen Zykluswert und eine aktive Dauer repräsentiert; die Informationen des zweiten Kollisionsauflösungsmodus werden durch ein Bitmap, einen Versatzwert und einen Zykluswert repräsentiert; die Informationen über den Trägerfrequenzressourcenpool der nicht bedienenden Zelle werden durch einen Verwendungszyklus und einen Versatzwert repräsentiert.

5. Basisstation, die Folgendes umfasst:
ein erstes Empfangsmodul (32), das dazu ausgelegt ist, Unterstützungsinformationen, die von einem Endgerät übertragen werden, zu empfangen, wobei die Unterstützungsinformationen Informationen über einen Kollisionsauflösungsmodus und/oder Informationen über einen Trägerfrequenzressourcenpool einer nicht bedienenden Zelle umfassen und dazu ausgelegt sind, erste Zeitdomäneninformationen anzuzeigen, an denen das Endgerät interessiert ist; und wobei die ersten Zeitdomäneninformationen zum Durchführen der Nahbereichsdienste verwendet werden, wobei das Endgerät nur einen Funksender unterstützt;
ein Auslegungsmodul (34), das dazu ausgelegt ist, zweite Zeitdomäneninformationen zum Durchführen der Nahbereichsdienste für das Endgerät gemäß den Unterstützungsinformationen auszulegen; und
ein erstes Übertragungsmodul (36), das dazu ausgelegt ist, Auslegungsinformationen zum Endgerät zu übertragen, wobei die Auslegungsinformationen die zweiten Zeitdomäneninformationen enthalten;
wobei das Auslegungsmodul (34) Folgendes umfasst:
eine Erfassungseinheit (42), die dazu ausgelegt ist, die Unterstützungsinformationen gemäß den Informationen des Kollisionsauflösungsmodus und/oder den Informationen über den Trägerfrequenzressourcenpool der nicht bedienenden Zelle zu erfassen; und
eine Auslegungseinheit (44), die dazu ausgelegt ist, die Unterstützungsinformationen, die in einem Zeitdomänenbereich einer Messlücke als die zweiten Zeitdomäneninformationen ausgelegt sind, zu verwenden; und/oder die Unterstützungsinformationen, die in einem inaktiven Zeitbereich eines diskontinuierlichen Empfangs als die zweiten Zeitdomäneninformationen ausgelegt sind, zu verwenden.

6. Vorrichtung nach Anspruch 5, wobei
der Kollisionsauflösungsmodus Folgendes umfasst: einen ersten Kollisionsauflösungsmodus und einen zweiten Kollisionsauflösungsmodus, die Informationen über den ersten Kollisionsauflösungsmodus werden durch einen Versatzwert, einen Zykluswert und eine aktive Dauer repräsentiert; die Informationen des zweiten Kollisionsauflösungsmodus werden durch ein Bitmap, einen Versatzwert und einen Zykluswert repräsentiert; die Informationen über den Trägerfrequenzressourcenpool der nicht bedienenden Zelle werden durch einen Verwendungszyklus und einen Versatzwert repräsentiert.

7. Endgerät, das Folgendes umfasst:
ein zweites Übertragungsmodul (52), das dazu ausgelegt ist, Unterstützungsinformationen zu einer Basisstation zu übertragen, wobei die Unterstützungsinformationen Informationen über einen Kollisionsauflösungsmodus und/oder Informationen über einen Trägerfrequenzressourcenpool einer nicht bedienenden Zelle umfassen und dazu ausgelegt sind, erste Zeitdomäneninformationen anzuzeigen, an denen das Endgerät interessiert ist; und wobei die ersten Zeitdomäneninformationen zum Durchführen der Nahbereichsdienste verwendet werden, wobei das Endgerät nur einen Funksender unterstützt;
ein zweites Empfangsmodul (54), das dazu ausgelegt ist, Auslegungsinformationen, die durch die Basisstation gemäß den Unterstützungsinformationen ausgelegt sind, zu empfangen, wobei die Auslegungsinformationen zweite Zeitdomäneninformationen zum Durchführen der Nahbereichsdienste durch das Endgerät enthalten; und
ein Ausführungsmodul (56), das dazu ausgelegt ist, die Nahbereichsdienste auf Trägerfrequenzen von bedienenden Zellen und/oder nicht bedienenden Zellen gemäß den zweiten Zeitdomäneninformationen durchzuführen;
wobei die zweiten Zeitdomäneninformationen auf mindestens eine der folgenden Weisen ausgelegt sind:
Verwenden der Unterstützungsinformationen, die in einem Zeitdomänenbereich einer Messlücke als die zweiten Zeitdomäneninformationen ausgelegt sind; und
Verwenden der Unterstützungsinformationen, die in einem inaktiven Zeitbereich eines diskontinuierlichen Empfangs als die zweiten Zeitdomäneninformationen ausgelegt sind.

8. Vorrichtung nach Anspruch 7, wobei
der Kollisionsauflösungsmodus Folgendes umfasst: einen ersten Kollisionsauflösungsmodus und einen zweiten Kollisionsauflösungsmodus, die Informationen über den ersten Kollisionsauflösungsmodus werden durch einen Versatzwert, einen Zykluswert und eine aktive Dauer repräsentiert; die Informationen des zweiten Kollisionsauflösungsmodus werden durch ein Bitmap, einen Versatzwert und einen Zykluswert repräsentiert; die Informationen über den Trägerfrequenzressourcenpool der nicht bedienenden Zelle werden durch einen Verwendungszyklus und einen Versatzwert repräsentiert.

## Revendications

1. Procédé pour traiter des services de proximité en multi-porteuse, comprenant le fait :
de recevoir (S102), par une station de base, des informations d'assistance transmises par un terminal, dans lequel les informations d'assistance comprennent des informations d'un mode de résolution des collisions et/ou des informations d'une réserve de ressources de fréquences porteuses d'une cellule non de desserte et sont configurées pour indiquer des premières informations de domaine temporel qui intéressent le terminal ; et dans lequel les premières informations de domaine temporel sont utilisées pour réaliser les services de proximité, dans lequel le terminal ne prend en charge qu'un seul émetteur radio ;
de configurer (S104), par la station de base, des deuxièmes informations de domaine temporel pour réaliser les services de proximité pour le terminal selon les informations d'assistance ; et
de transmettre (S106) au terminal, par la station de base, des informations de configuration, dans lequel les informations de configuration portent les deuxièmes informations de domaine temporel ;
dans lequel la configuration, par la station de base, de deuxièmes informations de domaine temporel pour réaliser les services de proximité pour le terminal selon les informations d'assistance comprend le fait :
d'acquérir, par la station de base, les informations d'assistance selon les informations du mode de résolution des collisions et/ou les informations de la réserve de ressources de fréquences porteuses de la cellule non de desserte ; et
d'utiliser, par la station de base, les informations d'assistance configurées dans une plage du domaine temporel d'un écart de mesure comme deuxièmes informations de domaine temporel ; et/ou utiliser, par la station de base, les informations d'assistance configurées dans une plage temporelle inactive d'une réception discontinue comme deuxièmes informations de domaine temporel.

2. Procédé selon la revendication 1, dans lequel le mode de résolution des collisions comprend :
un premier mode de résolution des collisions et un deuxième mode de résolution des collisions, les informations du premier mode de résolution des collisions sont représentées par une valeur de décalage, une valeur de cycle et une durée active ; les informations du deuxième mode de résolution des collisions sont représentées par une carte de bits, une valeur de décalage et une valeur de cycle ; les informations de la réserve de ressources de fréquences porteuses de la cellule non de desserte sont représentées par un cycle d'utilisation et une valeur de décalage.

3. Procédé pour traiter des services de proximité en multi-porteuse, comprenant le fait :
de transmettre (S202), par un terminal, des informations d'assistance à une station de base, dans lequel les informations d'assistance comprennent des informations d'un mode de résolution des collisions et/ou des informations d'une réserve de ressources de fréquences porteuses d'une cellule non de desserte et sont configurées pour indiquer des premières informations de domaine temporel qui intéressent le terminal ; et dans lequel les premières informations de domaine temporel sont utilisées pour réaliser les services de proximité, dans lequel le terminal ne prend en charge qu'un seul émetteur radio ;
de recevoir (S204), par le terminal, des informations de configuration qui sont configurées par la station de base selon les informations d'assistance, dans lequel les informations de configuration portent des deuxièmes informations de domaine temporel pour réaliser les services de proximité par le terminal ; et
de réaliser (S206), par le terminal, les services de proximité sur des fréquences porteuses de cellules de desserte et/ou de cellules non de desserte selon les deuxièmes informations de domaine temporel ;
dans lequel les deuxièmes informations de domaine temporel sont configurées d'au moins une des manières suivantes :
utiliser les informations d'assistance configurées dans une plage du domaine temporel d'un écart de mesure comme deuxièmes informations de domaine temporel ; et
utiliser les informations d'assistance configurées dans une plage temporelle inactive d'une réception discontinue comme deuxièmes informations de domaine temporel.

4. Procédé selon la revendication 3, dans lequel
le mode de résolution des collisions comprend : un premier mode de résolution des collisions et un deuxième mode de résolution des collisions, les informations du premier mode de résolution des collisions sont représentées par une valeur de décalage, une valeur de cycle et une durée active ; les informations du deuxième mode de résolution des collisions sont représentées par une carte de bits, une valeur de décalage et une valeur de cycle ; les informations de la réserve de ressources de fréquences porteuses de la cellule non de desserte sont représentées par un cycle d'utilisation et une valeur de décalage.

5. Station de base comprenant :
un premier module de réception (32) configuré pour recevoir des informations d'assistance transmises par un terminal, dans laquelle les informations d'assistance comprennent des informations d'un mode de résolution des collisions et/ou des informations d'une réserve de ressources de fréquences porteuses d'une cellule non de desserte et sont configurées pour indiquer des premières informations de domaine temporel qui intéressent le terminal ; et dans laquelle les premières informations de domaine temporel sont utilisées pour réaliser les services de proximité, dans laquelle le terminal ne prend en charge qu'un seul émetteur radio ;
un module de configuration (34) configuré pour configurer, selon les informations d'assistance, des deuxièmes informations de domaine temporel pour réaliser les services de proximité pour le terminal ; et
un premier module de transmission (36) configuré pour transmettre au terminal des informations de configuration, dans laquelle les informations de configuration portent les deuxièmes informations de domaine temporel ;
dans laquelle le module de configuration (34) comprend :
une unité d'acquisition (42) configurée pour acquérir les informations d'assistance selon les informations du mode de résolution des collisions et/ou les informations de la réserve de ressources de fréquences porteuses de la cellule non de desserte ; et
une unité de configuration (44) configurée pour utiliser les informations d'assistance configurées dans une plage du domaine temporel d'un écart de mesure comme deuxièmes informations de domaine temporel ; et/ou utiliser les informations d'assistance configurées dans une plage temporelle inactive d'une réception discontinue comme deuxièmes informations de domaine temporel.

6. Dispositif selon la revendication 5, dans lequel
le mode de résolution des collisions comprend : un premier mode de résolution des collisions et un deuxième mode de résolution des collisions, les informations du premier mode de résolution des collisions sont représentées par une valeur de décalage, une valeur de cycle et une durée active ; les informations du deuxième mode de résolution des collisions sont représentées par une carte de bits, une valeur de décalage et une valeur de cycle ; les informations de la réserve de ressources de fréquences porteuses de la cellule non de desserte sont représentées par un cycle d'utilisation et une valeur de décalage.

7. Terminal comprenant :
un deuxième module de transmission (52) configuré pour transmettre des informations d'assistance à une station de base, dans lequel les informations d'assistance comprennent des informations d'un mode de résolution des collisions et/ou des informations d'une réserve de ressources de fréquences porteuses d'une cellule non de desserte et sont configurées pour indiquer des premières informations de domaine temporel qui intéressent le terminal ; et dans lequel les premières informations de domaine temporel sont utilisées pour réaliser les services de proximité, dans lequel le terminal ne prend en charge qu'un seul émetteur radio ;
un deuxième module de réception (54) configuré pour recevoir des informations de configuration qui sont configurées par la station de base selon les informations d'assistance, dans lequel les informations de configuration portent des deuxièmes informations de domaine temporel pour réaliser les services de proximité par le terminal ; et
un module d'exécution (56) configuré pour réaliser les services de proximité sur des fréquences porteuses de cellules de desserte et/ou des cellules non de desserte selon les deuxièmes informations de domaine temporel ;
dans lequel les deuxièmes informations de domaine temporel sont configurées d'au moins une des manières suivantes :
utiliser les informations d'assistance configurées dans une plage du domaine temporel d'un écart de mesure comme deuxièmes informations de domaine temporel ; et
utiliser les informations d'assistance configurées dans une plage temporelle inactive d'une réception discontinue comme deuxièmes informations de domaine temporel.

8. Dispositif selon la revendication 7, dans lequel
le mode de résolution des collisions comprend : un premier mode de résolution des collisions et un deuxième mode de résolution des collisions, les informations du premier mode de résolution des collisions sont représentées par une valeur de décalage, une valeur de cycle et une durée active ; les informations du deuxième mode de résolution des collisions sont représentées par une carte de bits, une valeur de décalage et une valeur de cycle ; les informations de la réserve de ressources de fréquences porteuses de la cellule non de desserte sont représentées par un cycle d'utilisation et une valeur de décalage.
